# EUROPEAN PATENT SPECIFICATION

(11) **EP 0 877 774 B1**
(45) Date of publication and mention of the grant of the patent: **24.11.1999**
(21) Application number: 97900920.6
(22) Date of filing: 31.01.1997
(51) Int. Cl.: C08L 95/00

(54) **STABILIZATION OF INCOMPATIBLE MATERIALS BY MACROMOLECULES**
STABILISIERUNG VON UNVERTRÄGLICHEN MATERIALIEN DURCH MAKROMOLEKÜLE
STABILISATION DE MATIERES INCOMPATIBLES PAR DES MACROMOLECULES

(30) Priority: 01.02.1996 US 10981 P
(43) Date of publication of application: 18.11.1998
(73) Proprietor: POLYPHALT INC., North York Ontario M2J 5C9 (CA)
(72) Inventor: LIANG, Zhi-zhong, Richmond Hill, Ontario L4B 3B8 (CA)
(74) Representative: Lee, Nicholas John
(86) International application number: CA9700068
(87) International publication number: WO9728220

(56) References cited:
- EP-A- 0 329 836
- EP-A- 0 557 923
- WO-A-93/07219
- WO-A-94/22957

## Description

### FIELD OF INVENTION

The present invention relates to stabilizing insoluble particulate materials in liquid phases, in particular the stabilization of dispersions of olefinic polymers, particularly polyethylene, in bitumen.

### BACKGROUND TO THE INVENTION

It is well known that certain characteristics of bitumens can be improved by modification by or addition of polymeric materials. For example, European Patent Publication No. 317,025 to Shell Internationale Research Maatschappij BV, discloses a bitumen composition useful in road paving applications containing an asymmetric radial block copolymer which exhibits increased toughness and tenacity. PCT Publication No. WO 90/02776 to Société Nationale Elf Aquitaine, discloses bitumens modified with a copolymer of styrene and a conjugated diene and a coupling agent, such as sulfur.

Among the properties of the bitumen composition which potentially can be improved by dispersion of polymeric materials therein, particularly in roadway applications, are increased rutting resistance, enhanced low temperature cracking resistance, improved traction, better adhesion/cohesion, elevated tensile strength as well as other benefits. However, a problem often encountered with bitumen-polymer mixtures is an incompatibility of the bitumen and polymer components. Bitumens and most polymers, especially polyolefins such as polyethylene, are not readily miscible with each other in a molten state. A tendency exists for a dispersed molten polymer to agglomerate and coalesce rapidly and not remain dispersed when stirring of the bitumen composition ceases. Once such phase separation occurs, the potential for the improved properties is lost.

In U.S. Patents Nos. 5,280,064 and 5,494,966 in which the inventor herein is named as an inventor, there is described the steric stabilization of polyethylene and other polyolefins in bitumen by the formation of chemical bonds between functionalized polyethylene and functionalized polybutadiene to provide stable dispersions of polyethylene in bitumen.

### SUMMARY OF INVENTION

In accordance with the present invention, a polyolefin particulate phase, which is normally incompatible with bitumen and tends to separate from hot liquid bitumen when agitation is applied, can be stably dispersed in bitumen by employing a macromolecular material which is highly soluble in and/or interacted into bitumen medium, with or without the use of additional reagents, such as sulfur or other cross-linking agents.

The macromolecule material used as the stabilizing moietes (stabilizers) for the polyolefin dispersed phase in the present invention generally are unsaturated rubbers, such as butadiene-based styrene copolymers, and tire rubbers when fully digested and incorporated into bitumen.

In contrast to the stabilizing achieved in the aforementioned U.S. Patents Nos. 5,280,064 and 5,494,966, according to the present invention, there is no necessity for chemical bonding and anchor-attachment between the dispersed particulate phase and the dissolved macromolecules to provide a stable bitumen composition.

Accordingly, in one aspect of the present invention, there is provided a bituminous composition, comprising a continuous bitumen phase, a dispersed particulate polyolefin phase, and a macromolecular material dissolved in the bitumen phase and stabilizing the dispersed phase of polyolefin against deposition from the bitumen phase without chemical bonding or physical attachment between the macromolecular material and the particulate polyolefin.

The present invention, therefore, provides an alternative system of stabilization of dispersed particulate polyolefin in bitumen to the steric stabilization described above.

In general, the present invention has applied the basic principles of the phenomenon of depletion stabilization, primarily applied in aqueous systems, to the stabilization of dispersions of olefinic polymer particles in bitumen. The depletion stabilization principle is described in Chapter 17 of Polymer Stabilization of Colloidal Dispersions by Donald H. Napper (1983), "Polymer Stabilization of Colloidal Dispersion", chapter 17, pp. 378 to 408, Academic, London. As far as the inventor is aware, there has never been any prior suggestion to apply the basic principle of depletion stabilization to bituminous systems.

However, it is also known that the investigations of this phenomenon, according to authors of this reference, are still far from a full theoretical understanding of the phenomenon. Therefore, although the phenomenon of the present invention, involving a sufficient solvency (or digestion) and interaction of the macromolecules, at certain load levels, into the bitumen medium does provide stability to an incompatible polymer dispersed phase, and can be described to a certain degree by using the basic depletion stabilization concept, the manner by which the stable compositions of the present invention can be prepared should not be limited to those embodied in the above-referenced theory.

In another aspect of the present invention, there is provided a depletion-stabilized polymer-modified bituminous composition. Such composition comprises a continuous bituminous phase, a dispersed particulate polyolefin phase, and a macromolecular material dissolved in the bituminous phase and stabilizing the dispersed phase of polyolefin against separation from the bituminous phase.

### Depletion Stabilization of Polyolefin-Bitumen System

The stabilization of bituminous systems according to the principle of depletion stabilization, in which the stability of the particulate phase is imparted by free polymer, would require the presence of dissolved macromolecules (or free polymer molecules) in the bitumen. Normally in such systems:
- the dissolved macromolecules are made up of polymer segments which have an interaction with the bituminous phase which is larger than the interaction between the polymer segments themselves, otherwise the polymer would not be soluble in asphalt solvent. In this situation, usually, the macromolecular polymer segments have an interaction with the asphalt molecules which is less than the interaction between the asphalt molecules within the bituminous phase.
- the interaction between the macromolecular polymer segments and dispersed particulate phase is much less than the corresponding interaction between said macromolecular polymer segments and the bituminous phase.
However, it was found that such polyolefin-asphalt systems were unstable in a liquid form and separation of the dispersed particulate phase occurred during storage at elevated temperatures when stirring was stopped. Moreover, in most cases, macromolecular rubbers (elastomers) are not soluble in bitumen medium. However, some of those rubbers, particularly unsaturated rubbers, can be compatibilized into bitumen by improving the interaction of the rubber with asphalt cement, by employing a suitable reagent, such as a cross-linking agent, using procedures common to the industry.

It is necessary, therefore, to modify the system in order to achieve depletion stabilization of the dispersed polyolefin in bitumen. In order to provide a stable dispersion, it is necessary that:
- not only the interaction between the macromolecular polymer segments and the bituminous phase be greater than the interaction between the macromolecular polymer segments themselves
- but also the interaction between the macromolecular polymer segments and the bitumen be greater than the interactions within the bituminous phase.
In summary, for the macromolecules to act as stabilizing moietes, they preferably need not only the necessary solubility in bitumen but also a physically or chemically strong interaction with the bitumen matrix.

Accordingly, in an additional aspect, the present invention provides a bituminous composition, comprising a continuous bitumen phase, a dispersed polyolefin phase, and a macromolecular material dissolved in the bitumen phase, wherein:
i) the interaction between the macromolecular molecules in the macromolecular material and the bituminous phase is greater than the interaction between the macromolecular molecules, and
ii) the interaction between the macromolecular molecules in the macromolecular material and the bituminous phase is greater than the interactions within the bituminous phase.

By ensuring satisfaction of the above-recited interaction criteria there is obtained a positive free energy of flocculation of the system, which results in a stable dispersion of the polyolefin particles in bitumen. The flocculation of the dispersed phase is not favoured thermodynamically under these conditions, as in the case of a high solvency of the system and/or a strong interaction between the polymer segments and the asphalt molecules; stabilization being due to the establishment of a potential energy barrier analogous to thermodynamic metastability.

### GENERAL DESCRIPTION OF INVENTION

The provision of the positive free energy of flocculation of the dispersed phase in the continuous bitumen phase may be achieved by reacting the macromolecules with a suitable reagent, such as sulfur or peroxides, to chemically cross-link the macromolecules into the asphalt or by the addition of suitable additives such as, an aromatic oil, or by any other means of providing a high level of solvency and interaction of the macromolecules in the asphalt medium. Combinations of different means may be employed.

The term "bitumen" used herein means a class of black or dark-colored (solid, semi-solid or viscous) cementitious substances, natural or manufactured, composed principally of high molecular weight hydrocarbons of which asphalts, tars, pitches and asphaltites are typical. The term "asphalt" used herein means a dark, brown to black, cementitious material, solid or semi-solid in consistency, in which the predominating constituents are bitumens that occur in nature, as such, or are obtained as residue in petroleum refining.

Modified bitumen compositions described herein comprises a continuous phase of bitumen in which are dissolved macromolecular polymer segments and a separate dispersed polyolefinic phase being present, either as solid particles or liquid droplets, depending on the nature of the polymer and the temperature of the composition.

The polyolefin component of the bituminous composition may be any polyolefin which can be melted or particulated for dispersion in the bitumen and which imparts useful properties thereto. Generally, such polymer component comprises homopolymers and copolymers of ethylene and propylene, particularly homopolymers and copolymers of ethylene.

Virtually any grade of polyethylene polymer or copolymer may be used to provide the dispersed polymer component of the bituminous composition. One advantage provided by the present invention as it is applied to bitumen-polyolefin and other such compositions, is the ability to employ commingled, recycled or waste polyolefin in providing the dispersed polyolefin phase, rather than requiring virgin material. In particular, the polyolefin may be a homopolymer or copolymer of ethylene having a melting point which permits dispersion of the polyolefin as molten droplets in bitumen at a temperature of at least 120°C.

The macromolecules used in the stabilization of the dispersion of polyolefin particles in bitumen may be any desired material, including the unsaturated polymers or copolymers which are elastomeric, such as a polybutadiene, a styrene-butadiene-styrene (SBS) block copolymer, random styrene-butadiene copolymers (SBR), or other polybutadiene based copolymer, which may be provided in the form of devulcanized or otherwise dissociated rubber vulcanate. Other macromolecular material which may be employed includes natural rubber, polyisoprenes and nitrile-butadiene rubbers. Such macromolecules may have a molecular weight of about 5,000 to about 300,000 or higher, provided that the molecules are soluble in or can be fully digested into the bitumen.

The quantity of polyethylene or other polyolefin which can be dispersed in bitumen using the depletion stabilization procedure of the invention may vary widely, generally up to about 10 wt%, preferably about 0.5 to about 7 wt%. However, at least sufficient macromolecular material must be present in the bitumen system to provide a potential energy barrier to the interaction of the particles which would otherwise lead to their coalescence, and thereby stabilizing the polyolefin particles against coalescence and flocculation which would result in separation from the bitumen. Unlike the steric stabilization system which has previously been described, as detailed above, there is no need for chemical bonding between or chemical attachment to the dispersed particulate phase and the macromolecules required to maintain a stable dispersion.

For the purpose of formation of a stable composition herein, the bitumen is blended with the macromolecular material by high shear mixing at an elevated temperature and a composition provided having the conditions of interactions discussed above. Such conditions may require crosslinking the macromolecular molecules with the bitumen to increase the interaction of the macromolecules and the bitumen.

Thereafter, the polyethylene or other olefin polymer, is dispersed in the bitumen-macromolecular material composition at a temperature above the fusion temperature of the olefin polymer. The olefin polymer melts and, under the influence of high shear mixing, is dispersed as small discrete molten droplets in the bitumen. The particle size of the dispersed particles may be modified by adjusting the shear applied and may be less than one micron. Such small discrete particles become depletion stabilized against coalescence when the mixing ceases by the presence of the macromolecular material dissolved in the bitumen.

The depletion stabilized composition shows no tendency to phase separate at elevated temperatures in the range of about 100° to about 200°C and remains stable in the absence of stirring.

The composition also may be cooled to ambient temperature, may be reheated up to about 160°C or move up to about 200° several times and may be maintained at such high temperatures for several days, without any tendency to phase separation.

The ability for the small polyethylene droplets to remain dispersed is important, since on-site production of the polyethylene-modified bitumen composition is not required, in contrast to the situation which exists with high-shear non-stabilized compositions. The bitumen compositions provided herein are inherently stable by reason of the macromolecular material providing a potential energy barrier to particle interaction. A positive free energy of flocculation of the dispersed phase exists, permitting the composition to be solidified and reheated without loss of uniformity or stability.

An effective dispersion temperature for the polyethylene or other polyolefin is obtained at least about 10° above the melting or fusion temperature of the polyolefin being dispersed, depending on factors, such as polymer molecular weight, matrix viscosity and shear force of mixing.

Thus, a grade of polyethylene having a melting or fusion point of 130° to 135°C can be dispersed at a temperature of from about 140°C to 250°C. Commonly found low density, linear low density and high density polyethylenes thus may be dispersed and stabilized by a stabilizer of the present invention. Most polyethylenes used in consumer products have fusion temperatures in the acceptable range and polyethylene blends, such as are obtained as pelletized, flaked or powdered of recycled material, are suitable for dispersal in bitumens and may be stabilized according to the present invention.

An upper limit may be placed on the time and temperature used in dispersal of a polymer in bitumen according to the disclosed embodiments of the present invention because of the lack of stability of polybutadienes above about 210°C, especially in air. However, it is possible to disperse a polymer in bitumen at a temperature higher than 210°C if an inert gas, such as nitrogen, blankets the mixing process.

The stabilized bituminous compositions provided herein may be used as a paving material for all types of paving as well as finding applications in roofing membranes, shingles, waterproofing membranes, sealants, caulks, potting resins and protective finishes. Paving materials generally include aggregate, such as crushed stone pebbles, sand etc., along with the bitumen composition. Similarly, other additives to the bitumen composition are employed, depending on the end use to which the invention is put. For example, a roofing material may be obtained by the addition of suitable fillers, such as asbestos, carbonates, silicas, wood fibers, mica, sulfates, clays, pigments and/or fire retardants, such as chlorinated waxes. For crack-filler application, an oxide may advantageously be added.

### EXAMPLES

### Example 1

A first series of experiments was carried out to attempt to provide a stable dispersion of molten polyethylene droplets in bitumen using styrene-butadiene-styrene (SBS) macromolecules.

Eight runs were performed using various polymer systems in two different bitumens and the storage stability determined by microscopic inspection (magnification : 400x) after maintenance of the composition stored in a vertical test tube for 48 hours at 160°C and by measurement of the viscosity of the composition at the top and bottom of the samples at 135°C or 180°C after standing for 48 hours. A ratio of 0.8 to 1.2 for a difference in viscosity at the top and bottom is considered acceptable and the composition stable against coalescence and separation of the molten polyethylene particles. More deviation from this range indicates a more significant phase separation.

The results obtained from the eight runs are shown in the following Table 1:

**TABLE 1**

| **Component** | **Run No.** | | | | | | | |
|---|---|---|---|---|---|---|---|---|
| | 1 | 2 | 3 | 4 | 5 | 6 | 7 | 8 |
| Asphalt 1 | 98 | 0 | 96 | 0 | 94 | 0 | 94 | 0 |
| Asphalt 2 | 0 | 98 | 0 | 96 | 0 | 94 | 0 | 94 |
| LLDPE | 2 | 2 | 0 | 0 | 2 | 2 | 2 | 2 |
| SBS | 0 | 0 | 4 | 4 | 4 | 4 | 0 | 0 |
| SBS pre-reacted¹ | 0 | 0 | 0 | 0 | 0 | 0 | 4 | 4 |
| Viscosity cp, T/B at 135°C | 650/250 | 663/368 | 740/750 | 3285/195² | 1285/913 | 4940/215² | 1725/1515 | 920/880² |
| Ratio | 26 | 1.8 | 0.99 | 16.8 | 1.4 | 2.3 | 1.13 | 1.05 |
| Stability | no | no | yes | no | no | no | yes | yes |

| | | | | | | | | |
|---|---|---|---|---|---|---|---|---|
| ¹ pre-reacted with asphalt using sulfur (4 parts per 100 parts of SBS) | | | | | | | | |
| ² tested at 180°C | | | | | | | | |

In this set of experiments, the polyethylene employed was recycled linear low density commercial polyethylene (LLDPE, melt index: 1 to 2 gram/10 min, density: 0.920, and supplied by Rondy & Co., Inc.) and the macromolecule was provided by styrene-butadiene-styrene (SBS) thermoplastics rubber (trade name: Europrene T 161B, 30% bound styrene, 70% bound butadiene, manufactured by Enichem Elastomers America Inc.). Two sources of asphalt cements based on the same performance grade (AC-5 (Asphalt Institute - see The Asphalt Handbook, Manual Series No. 4 (MS-4) 1989 Edition) (Asphalt 1 and Asphalt 2) were employed: Asphalt 1 used for runs 1, 3, 5 and 7 has 167 dmm penetration at 25°C, 40°C softening point and 195 of brookfield viscosity at 135°C and Asphalt 2 used for runs 2, 4, 6 and 8 has 148dmm penetration at 25°C, 45°C softening point and 233 cp brookfield viscosity at 135°C.

In runs 1 and 2, polyethylene (2 parts per 100 total parts) alone was dispersed in Asphalt 1 and Asphalt 2 respectively using a high shear with a Brinkman Polytron Mixer for 2 hours at 180°C. After the mixing was stopped, the dispersion of polyethylene droplets rapidly coalesced and separated from the bitumen, indicating that the LLDPE was highly unstable in the asphalt.

In runs 3 and 4, the SBS (4 parts per 100 total parts) alone was dispersed in Asphalt 1 and Asphalt 2 respectively under the same condition as that used in runs 1 and 2. Microscopic observation on these two samples on a hot stage at about 160°C showed that the SBS was compatible with Asphalt 1 and not with Asphalt 2. The storage stability tests also supported these results (seen in Table 1).

In runs 5 and 6, a mixture of polyethylene (2 parts per 100 total parts) and SBS (4 parts per 100 total parts) was dispersed in Asphalt 1 and Asphalt 2 respectively under the same condition as the other runs. In comparison between run 5 and run 6, both microscopic observation and storage stability evaluation showed that the polyethylene dispersion was more stable in the SBS/Asphalt 1 compatible system than in the SBS/Asphalt 2 incompatible system to a certain degree. This result indicates that free polymer, once dissolved in asphalt medium, tends to add stability to dispersions. However, for the composition of run 5, flocculation of the dispersed phase was still favoured thermodynamically when the macromolecules are excluded from the interparticle region, since in such cases mixing of asphalt molecules (from the interparticle regions) with the polymer-asphalt solution decreases the free energy of the system.

In runs 7 and 8, 4 parts per 100 total parts of SBS were prereacted with asphalt (Asphalt 1 and Asphalt 2 respectively) using sulfur (4 parts for 100 parts of SBS) as a cross-linking agent at 180°C for 90 min., prior to blending in the polyethylene (2 parts per 100 total parts) for 30 min. The polyethylene remained stably dispersed in the SBS reacted asphalt medium after 48 hours storage at 160°C (see the test result in Table 1).

### Example 2:

A second series of experiments was carried out again to attempt to provide a stable dispersion of molten polyethylene droplets in bitumen, in this case using tyre rubber macromolecules.

In this second series of experiments, the macromolecules were provided by tyre rubber particles which had been devulcanized or liquified to a condition at which the carbon black remained in suspension and there were no discernible residual rubber particles (DTR). Such material was prepared as described in detail in published PCT WO 94/14896, the disclosure of which is incorporated herein by reference.

Six runs were performed using treated tyre rubber and untreated tyre rubber dispersed respectively in bitumen (Asphalt 2) to evaluate subsequent polyethylene dispersion. The storage stability was determined by the same method as described in Example 1. The results obtained from six runs are shown in the following Table 2:

**TABLE 2**

| **Component** in part | **Run No.** | | | | | |
|---|---|---|---|---|---|---|
| | 1 | 2 | 3 | 4 | 5 | 6 |
| Asphalt 2 | 94 | 86 | 84 | 86 | 84 | 84 |
| Aromatic oil | 4 | 4 | 4 | 4 | 4 | 4 |
| LLDPE | 2 | 0 | 2 | 0 | 2 | 2 |
| Tyre rubber (untreated) | 0 | 10 | 10 | 0 | 0 | 0 |
| Tyre rubber (dissociated)¹ | 0 | 0 | 0 | 10 | 10 | 10 |
| Sulfur | 0 | 0 | 0 | 0 | 0 | 0.2 |
| Viscosity cp, T/B at 135°C | 788/286 | 430/2250 | 755/1925 | 450/485 | 720/673 | 923/905 |
| Ratio | 2.76 | 0.19 | 0.58 | 0.93 | 1.07 | 1.02 |
| Stability | no | no | no | yes | yes | yes |

| | | | | | | |
|---|---|---|---|---|---|---|
| ¹ treated with asphalt/aromatic oil (rubber/oil/asphalt: 56/23/51) | | | | | | |

In this set of experiments, the polyethylene used was the same recycled linear low density commercial polyethylene as used in Example 1. Tyre rubber was ground rubber (Granulite) manufactured from discarded tires. Granulite had a particle size on average about 40 mesh and was produced from passenger tires (with fiber and wire removed) by Baker Rubber Inc. The aromatic oil employed was a hydrolene recycling agent (Hydrolene 90) having total aromatics of 83.6%, saturates of 16.3% and asphaltenes of 0.1%.

The dissociated tyre rubber was the ground tyre rubber processed in Asphalt 2 with the aromatic oil under high shear (using a Brinkman Polytron Mixer) at a temperature range of about 240° to 260°C for 3 hours, following the procedure of the above-mentioned WO 94/14896. The starting composition in the devulcanization process was 25 parts of the ground rubber in 23 parts of the oil and 51 parts of the asphalt. Final composition of the dissociated rubber had a ratio of rubber/oil/asphalt: 56/23/51 achieved by an incremental loading of the ground tyre rubber to the mixture of rubber/oil/asphalt during the high shear operation, as described in WO 94/14896.

In run 1, polyethylene (2 parts per 100 total parts) alone was dispersed in a mixture of Asphalt 2 (94 parts) and Hydrolene oil (4 parts) in a Brinkman Polytron Mixer for 2 hours at 180°C. After the mixing was stopped, the dispersion of polyethylene droplets was not stable and rapidly coalesced.

In run 2, the ground tyre rubber (10 parts per 100 total parts) alone was dispersed in the mixture of Asphalt 2 (86 parts) and Hydrolene oil (4 parts) under a high shear mixing at a temperature range about 240°C to 260°C for 3 hours. Microscopic observation of samples from run 2 showed that the tyre rubber particles were still discernible in asphalt binder and most of the particles sank due to gravity to the bottom after the composition was stored in a vertical test tube for 48 hours at 160°C. The storage stability tests supported this result (seen in Table 2).

In run 3, polyethylene (2 parts per 100 total parts) was dispersed in a mixture of Asphalt 2/Hydrolene oil/tyre rubber described in run 2 and mixed for 30 min. at 180°C. The dispersion of polyethylene droplets was not stable in this system and rapidly coalesced and creamed to form a top layer after 48 hours hot storage at 160°C.

In run 4, 23 parts of the mixture with a ratio of rubber/oil/asphalt (Asphalt 2): 56/23/51 were dispersed in 77 parts of asphalt (Asphalt 2) at 180°C for 30 min. and a composition was formed containing 10 parts of the treated tyre rubber, 4 parts of the oil and 86 parts of Asphalt 2. For the sample in this run, there were no discernible residual rubber particles, the rubber macromolecules from the tyre were solubilized in asphalt and the carbon black was highly dispersed and suspended without separation. In this system, polyethylene (2 parts per 100 total parts) was dispersed stably in the tyre rubber solubilized asphalt medium after 48 hours storage at 160°C (see the result on run 5 in Table 2). A further reaction of the treated rubber molecules with asphalt using 0.2 parts of sulfur did not further improve the solvency of the system for the stabilization of polyethylene dispersion (see the result on run 6 in Table 2).

## Claims

1. A depletion-stabilized polymer-modified bituminous composition, comprising:
a continuous bituminous phase, and
a dispersed particulate polyolefin phase, characterized by:
a macromolecular material dissolved in the said bituminous phase and stabilizing the dispersed phase of polyolefin against separation from the bituminous phase.

2. The composition claimed in claim 1, in which the interaction between said macromolecular material and the bitumen is greater than the interactions within the bituminous phase.

3. The composition claimed in claim 2, in which said greater interaction is achieved by cross-linking the macromolecular material with the bitumen.

4. The composition claimed in claim 3, in which said cross-linking is effected using sulfur.

5. The composition claimed in any one of claims 1 to 4, in which said macromolecular material is dissolved into the bituminous phase to establish a potential energy barrier to coalescence and flocculation of dispersed phase.

6. A bituminous composition, comprising:
a continuous bituminous phase, and
a dispersed particulate polyolefin phase, characterized by:
a macromolecular material dissolved in said bituminous phase and stabilizing the dispersed phase of polyolefin against separation from the bituminous phase without chemical bonding or physical attachment between the macromolecular material and the particulate polyolefin.

7. A bituminous composition, comprising:
a continuous bituminous phase, and
a dispersed particulate polyolefin phase, characterized by:
a macromolecular material dissolved in said bituminous phase and providing a potential energy barrier to coalescence and flocculation of the dispersed polymer phase to maintain a stable dispersion of the particulate polyolefin phase in the bituminous phase.

8. The composition claimed in claim 7, in which said potential energy barrier to coalescence and flocculation is provided by:
(i) the interaction between macromolecular molecules in the macromolecular material and the bituminous phase is greater than the interaction between the macromolecular molecules, and
(ii) the interaction between macromolecular molecules in the macromolecular material and the bituminous phase is greater than the interactions within the bituminous phase.

9. A bituminous composition, comprising:
a continuous bituminous phase, and
a dispersed polyolefin phase, characterized by:
a macromolecular material dissolved in the bitumen phase, wherein:
(i) the interaction between macromolecular molecules in the macromolecular material and the bituminous phase is greater than the interaction between the macromolecular molecules, and
(ii) the interaction between macromolecular molecules in the macromolecular material and the bituminous phase is greater than the interactions within the bituminous phase.

10. The composition claimed in any one of claims 1 to 9, in which said polyolefin is a homopolymer or copolymer of ethylene.

11. The composition claimed in any one of claims 1 to 10, in which said polyolefin is a homopolymer or copolymer of ethylene having a melting point which permits dispersion of the polyolefin as molten droplets in bitumen at a temperature of at least 120°C.

12. The composition claimed in any one of claims 1 to 11, in which said macromolecular material is an unsaturated polymer or copolymer which is an elastomer.

13. The composition claimed in claim 12, in which said macromolecular material is a butadiene homopolymer or butadiene-based copolymer.

14. The composition claimed in any one of claims 1 to 11, in which said macromolecular material comprises devulcanized or dissociated rubber vulcanate.

## Patentansprüche

1. Gegen Abbau stabilisierte, polymermodifizierte bituminöse Zusammensetzung, umfassend:
eine kontinuierliche bituminöse Phase und
eine Phase aus dispergiertem teilchenförmigem Polyolefin, gekennzeichnet durch:
ein makromolekulares Material, das in der bituminösen Phase aufgelöst ist und das die dispiergierte Phase aus Polyolefin gegen Trennung von der bituminösen Phase stabilisiert.

2. Zusammensetzung nach Anspruch 1, in der die Wechselwirkung zwischen dem makromolekularen Material und dem Bitumen größer ist als die Wechselwirkungen innerhalb der bituminösen Phase.

3. Zusammensetzung nach Anspruch 2, in der die größere Wechselwirkung durch Quervernetzung des makromolekularen Materials mit dem Bitumen erreicht wird.

4. Zusammensetzung nach Anspruch 3, in der die Quervernetzung durch den Einsatz von Schwefel bewirkt wird.

5. Zusammensetzung nach einem der Ansprüche 1 bis 4, in der das makromolekulare Material in der bituminösen Phase aufgelöst ist, um eine Potentialenergiebarriere für Koaleszenz und Flokkulation der dispergierten Phase zu errichten.

6. Bituminöse Zusammensetzung, umfassend:
eine kontinuierliche bituminöse Phase, und
eine Phase aus dispergiertem teilchenförmigem Polyolefin, gekennzeichnet durch:
ein makromolekulares Material, das in der bituminösen Phase aufgelöst ist und die dispergierte Phase aus Polyolefin gegen Trennung- von der bituminösen Phase stabilisiert, ohne daß es zu einer Bindung oder physikalischen Anbindung zwischen dem makromolekularen Material und dem teilchenförmigen Polyolefin kommt.

7. Bituminöse Zusammensetzung, umfassend:
eine kontinuierliche bituminöse Phase und
eine Phase aus dispergiertem teilchenförmigem Polyolefin, gekennzeichnet durch:
ein makromolekulares Material, das in der bituminösen Phase aufgelöst ist und für eine Potentialenergiebarriere für Koaleszenz und Flokkulation der dispergierten Polymerphase sorgt, so daß eine stabile Dispersion der Phase aus teilchenförmigem Polyolefin in der bituminösen Phase erhalten wird.

8. Zusammensetzung nach Anspruch 7, in der die Potentialenergiebarriere für Koaleszenz und Flokkulation besorgt wird durch:
(i) die Wechselwirkung zwischen makromolekularen Molekülen in dem makromolekularen Material und der bituminösen Phase ist größer als die Wechselwirkung zwischen makromolekularen Molekülen, und
(ii) die Wechselwirkung zwischen makromolekularen Molekülen in dem makromolekularen Material und der bituminösen Phase ist größer als die Wechselwirkungen innerhalb der bituminösen Phase.

9. Bituminöse Zusammensetzung, umfassend:
eine kontinuierliche bituminöse Phase und
eine Phase aus dispergiertem Polyolefin, gekennzeichnet durch:
ein makromolekulares Material, das in der Bitumenphase aufgelöst ist, wobei:
(i) die Wechselwirkung zwischen makromolekularen Molekülen in dem makromolekularen Material und der bituminösen Phase ist größer als die Wechselwirkung zwischen den makromolekularen Molekülen, und
(ii) die Wechselwirkung zwischen makromolekularen Molekülen in dem makromolekularen Material und der bituminösen Phase ist größer als die Wechselwirkungen innerhalb der bituminösen Phase.

10. Zusammensetzung nach einem der Ansprüche 1 bis 9, in der das Polyolefin ein Homopolymer oder Copolymer des Ethylens ist.

11. Zusammensetzung nach einem der Ansprüche 1 bis 10, in der das Polyolefin ein Homopolymer oder Copolymer des Ethylens ist mit einem Schmelzpunkt, die eine Dispersion des Polyolefins als geschmolzene Tröpfchen in Bitumen bei einer Temperatur von mindestens 120°C zuläßt.

12. Zusammensetzung nach einem der Ansprüche 1 bis 11, in der das makromolekulare Material ein ungesättigtes Polymer oder Copolymer ist, das ein Elastomer ist.

13. Zusammensetzung nach Anspruch 12, in der das makromolekulare Material ein Butadienhomopolymer oder auf Butadien basierendes Copolymer ist.

14. Zusammensetzung nach einem der Ansprüche 1 bis 11, in der das makromolekulare Material entvulkanisiertes oder dissoziiertes Gummivulkanat umfaßt.

## Revendications

1. Composition bitumineuse modifiée par un polymère et stabilisée contre la déplétion, comprenant:
une phase bitumineuse continue et
une phase polyoléfinique particulaire dispersée caractérisée par:
un matériau macromoléculaire dissous dans ladite phase bitumineuse et stabilisant la phase dispersée polyoléfinique vis à vis de la séparation de la phase bitumineuse.

2. Composition telle que revendiquée dans la revendication 1, dans laquelle l'interaction entre ledit matériau macromoléculaire et le bitume est supérieure aux interactions à l'intérieur de la phase bitumineuse.

3. Composition telle que revendiquée dans la revendication 2, dans laquelle ladite interaction supérieure est obtenue par réticulation du matériau macromoléculaire avec le bitume.

4. Composition telle que revendiquée dans la revendication 3, dans laquelle ladite réticulation est effectuée en utilisant du soufre.

5. Composition telle que revendiquée dans l'une quelconque des revendications 1 à 4, dans laquelle ledit matériau macromoléculaire est dissous dans la phase bitumineuse afin d'établir une barrière d'énergie potentielle à la coalescence et à la floculation de la phase dispersée.

6. Composition bitumineuse, comprenant :
une phase bitumineuse continue et
une phase polyoléfinique particulaire dispersée caractérisée par:
un matériau macromoléculaire dissous dans ladite phase bitumineuse et stabilisant la phase dispersée polyoléfinique vis à vis de la séparation de la phase bitumineuse, sans liaison chimique ou lien physique entre le matériau macromoléculaire et la polyoléfine particulaire.

7. Composition bitumineuse, comprenant :
une phase bitumineuse continue et
une phase polyoléfinique particulaire dispersée caractérisée par:
un matériau macromoléculaire dissous dans ladite phase bitumineuse et fournissant une barrière d'énergie potentielle à la coalescence et à la floculation de la phase polymère dispersée afin de maintenir une dispersion stable de la phase polyoléfinique particulaire dans la phase bitumineuse.

8. Composition telle que revendiquée dans la revendication 7, dans laquelle ladite barrière d'énergie potentielle à la coalescence et à la floculation est fournie par le fait que:
(i) l'interaction entre les molécules macromoléculaires dans le matériau macromoléculaire et la phase bitumineuse est supérieure à l'interaction entre les molécules macromoléculaires et
(ii) l'interaction entre les molécules macromoléculaires dans le matériau macromoléculaire et la phase bitumineuse est supérieure aux interactions à l'intérieur de la phase bitumineuse.

9. Composition bitumineuse, comprenant :
une phase bitumineuse continue et
une phase polyoléfinique dispersée caractérisée par:
un matériau macromoléculaire dissous dans la phase bitumineuse, dans laquelle
(i) l'interaction entre les molécules macromoléculaires dans le matériau macromoléculaire et la phase bitumineuse est supérieure à l'interaction entre les molécules macromoléculaires et
(ii) l'interaction entre les molécules macromoléculaires dans le matériau macromoléculaire et la phase bitumineuse est supérieure aux interactions à l'intérieur de la phase bitumineuse.

10. Composition telle que revendiquée dans l'une quelconque des revendications 1 à 9, dans laquelle ladite polyoléfine est un homopolymère ou un copolymère d'éthylène.

11. Composition telle que revendiquée dans l'une quelconque des revendications 1 à 10, dans laquelle ladite polyoléfine est un homopolymère ou un copolymère d'éthylène, ayant un point de fusion qui permet la dispersion de la polyoléfine sous forme de gouttelettes à l'état fondu dans le bitume à une température égale à au moins 120°C.

12. Composition telle que revendiquée dans l'une quelconque des revendications 1 à 11, dans laquelle ledit matériau macromoléculaire est un polymère ou un copolymére insaturé qui est un élastomère.

13. Composition telle que revendiquée dans la revendication 12, dans laquelle ledit matériau macromoléculaire est un homopolymère de butadiène ou un copolymère à base de butadiène.

14. Composition telle que revendiquée dans l'une quelconque des revendications 1 à 11, dans laquelle ledit matériau macromoléculaire comprend un vulcanate de caoutchouc dévulcanisé ou dissocié.
